# EUROPEAN PATENT SPECIFICATION

(11) **EP 3 849 334 B1**
(45) Date of publication and mention of the grant of the patent: **31.12.2025**
(21) Application number: 18797426.6
(22) Date of filing: 18.10.2018
(51) Int. Cl.: A23K 10/20, A23K 10/26, A23K 20/147, A23K 20/158, A23K 20/163, A23K 50/42

(54) **PET FOOD COMPOSITIONS**
HAUSTIERFUTTERZUSAMMENSETZUNGEN
COMPOSITIONS ALIMENTAIRES POUR ANIMAUX DE COMPAGNIE

(43) Date of publication of application: 21.07.2021
(73) Proprietor: Hill's Pet Nutrition, Inc., Topeka, KS 66603 (US)
(72) Inventor: BADRI, Dayakar, Lawrence, Kansas 66047 (US); JEWELL, Dennis, Lawrence, Kansas 66049 (US)
(74) Representative: Wichmann, Hendrik
(86) International application number: PCT/US2018/056440
(87) International publication number: WO 2020/081079

(56) References cited:
- EP-A1- 1 344 458
- WO-A1-01/17365
- WO-A1-2008/103179
- US-A- 5 968 569
- US-A1- 2009 202 674
- US-A1- 2011 034 411
- US-A1- 2017 173 138

## Description

### BACKGROUND

Animals, particularly companion animals (e.g., dogs and cats), suffer from a wide variety of health issues as they age. Previous attempts to address these issues focused on treating being over-weight, or in extreme cases being obese. Specifically, food compositions were specific tailored to reduce caloric intake or affect metabolism solely to reduce the weight of the animal. However, separate from controlling the diet of an animal, these animals also suffer from separate age-related gastrointestinal health issues. Thus, there is a need for a food composition that can help address the gastrointestinal health issues of an animal that arise as the animal ages over time.
US 2011/034411 A1 describes methods for maintaining or improving the gastrointestinal health of animals susceptible to or suffering from poor gastrointestinal health by administering to the animal a gastrointestinal health maintaining or improving amount of a food composition which comprises 1-20% carbohydrate, 3-10% total dietary fiber containing 10-40% soluble fiber and 90-60% insoluble fiber, and 0.1-10% omega-3 fatty acids, and has a digestibility coefficient of at least 80.

### BRIEF SUMMARY

The present invention provides a pet food composition for enhancing nicotinamide adenine dinucleotide metabolism and increasing levels of nicotinamide adenine dinucleotide oxidized form, the food composition comprising: a protein; a carbohydrate; and a dietary fiber comprising insoluble fiber and soluble fiber in a weight ratio ranging from about 10:1 to about 13:1, whereby the dietary fiber is present in an amount ranging from about 2 wt. % to about 10 wt. % based on the total weight of the food composition, wherein the weight ratio of protein to carbohydrate is from about 0.5:1 to about 0.8:1.

In embodiments, the present invention includes a pet food composition for enhancing nicotinamide adenine dinucleotide metabolism and increasing levels of nicotinamide adenine dinucleotide oxidized form, the food composition comprising: protein; carbohydrate; fat; and dietary fiber comprising insoluble fiber and soluble fiber in a weight ratio from about 10:1 to about 13:1, whereby the dietary fiber is present in an amount of from about 2 wt. % to about 10 wt. %, wherein a weight ratio of protein to carbohydrate ranges from about 0.5:1 to about 0.8:1, and the fat is present in an amount greater than 16 wt. % based on the total weight of the food composition.

The present invention also includes provides the pet food composition of the invention for use in a method of improving age-related gastrointestinal generation in a cat, wherein improving age-related gastrointestinal degeneration in the cat includes enhancing nicotinamide adenine dinucleotide metabolism and increasing levels of oxidized nicotinamide adenine dinucleotide in the cat. The method comprises feeding the animal one or more of the food compositions of the invention thereby enhancing nicotinamide adenine dinucleotide metabolism and increasing levels of nicotinamide adenine dinucleotide oxidized form in the animal.

### DETAILED DESCRIPTION

The following description of the preferred embodiment(s) is merely exemplary in nature and is in no way intended to limit the invention which is defined in the claims.

As used throughout, ranges are used as shorthand for describing each and every value that is within the range. Any value within the range can be selected as the terminus of the range.

Unless otherwise specified, all percentages and amounts expressed herein and elsewhere in the specification should be understood to refer to percentages by weight. The amounts given are based on the active weight of the material.

Unless otherwise specified, all percentages and amounts expressed herein and elsewhere in the specification should be understood to refer to percentages by weight. The amounts given are based on the active weight of the material. According to the present application, the term "about" means +/- 5% of the reference value. According to the present application, the term "substantially free" less than about 0.1 wt. % based on the total of the referenced value.

It is contemplated that the invention described herein is not limited to the particular methodology, protocols, and reagents described as these may vary. It is also to be understood that the terminology used herein is for the purpose of describing particular embodiments only and is not intended to be limiting the present invention which is defined in the claims

Unless defined otherwise, all technical and scientific terms used herein have the same meanings as commonly understood by one of ordinary skill in the art to which this invention belongs.

As used herein and in the appended claims, the singular forms "a", "an", and "the" include plural reference unless the context clearly dictates otherwise.

As used herein, an "effective amount of time" may be determined by observing or measuring the weight, weight loss, or lean muscle gain in an animal, and may be determined by one of skill in the art without undue experimentation.

The term "food" or "food product" or "pet food composition" means a product or composition that is intended for ingestion by an animal, including a human, and provides nutrition to the animal.

The term "regular basis" means at least monthly administration and, in one aspect, at least weekly administration. More frequent administration or consumption, such as twice or three times weekly, can be performed in certain embodiments. In one aspect, an administration regimen can comprise at least once daily consumption.

The term "single package" means that the components of a kit are physically associated in or with one or more containers and considered a unit for manufacture, distribution, sale, or use. Containers include, but are not limited to, bags, boxes, cartons, bottles, packages such as shrink wrap packages, stapled or otherwise affixed components, or combinations thereof. A single package may be containers of the pet food compositions, or components thereof, physically associated such that they are considered a unit for manufacture, distribution, sale, or use.

The present invention relates to any animal, preferably a mammal, more preferably a companion animal. The term "companion animal" refers to any animal that lives in close association with humans and includes, but is not limited to, canines and felines of any breed. For example, it is contemplated herein that this term may also encompass any animal whose diet may be controlled by humans and which may benefit from feeding the formulations disclosed herein. These animals may include, for example, domesticated farm animals (e.g. cattle, horses, swine, etc.) as well as undomesticated animals held in captivity, e.g. in zoological parks and the like. Preferably, companion animals are cats and dogs.

All percentages expressed herein are on a weight by dry matter basis unless specifically stated otherwise.

The present invention is directed to a pet food composition of the invention for use in improving age-related gastrointestinal generation in a cat, wherein improving age-related gastrointestinal degeneration in the cat includes enhancing nicotinamide adenine dinucleotide (herein referred to as "NAD") metabolism and increasing levels of oxidized nicotinamide adenine dinucleotide (herein referred to as "NAD+") in the cat- thereby improving overall gastrointestinal health.

As used herein, "an amount effective", "an effective amount", and like terms refer to that amount of a compound, material or composition as described herein that may be effective to achieve a particular biological result. Such results may include, but are not limited to, the increasing levels of NAD and NAD+ in a cat to a level to improve age-related gastrointestinal degeneration. An effective amount may be based on several factors, including a cat's ideal weight, the metabolizable energy of the composition, and frequency of feeding the pet food compositions of the present invention, e.g., once, twice, or three times daily, and other compositions fed to the cat.

Protein may be supplied by any of a variety of sources known by those skilled in the art, including plant sources, animal sources, or both. Animal sources include, for example, meat, meat by-products, seafood, dairy, eggs, etc. Meats include, for example, the flesh of poultry, fish, and mammals (e.g., cattle, pigs, sheep, goats, and the like). Meat by-products include, for example, lungs, kidneys, brain, livers, and stomachs and intestines (freed of all or essentially all their contents). The protein can be intact, almost completely hydrolyzed, or partially hydrolyzed.

The protein may be crude protein material and may comprise plant proteins such as soybean meal, soy protein concentrate, corn gluten meal, wheat gluten, cottonseed, and peanut meal, or animal proteins such as casein, albumin, and meat protein. Examples of meat protein useful herein include beef, pork, lamb, equine, poultry, fish, and mixtures thereof.

The protein may be present in an amount ranging from about 20 wt. % to about 40 wt. % based on the total weight of the food composition - including all percentages and sub-ranges there-between. In a preferred embodiment, the protein may be present in an amount ranging from about 25 wt. % to about 45 wt. % based on the total weight of the food composition - including all percentages and sub-ranges there-between. Preferably the protein may be present in an amount ranging from about 25 wt. % to about 30 wt. % based on the total weight of the food composition - including all percentages and sub-ranges there-between. In some embodiments, the protein may be present in an amount of about 27.5 wt.% based on the total weight of the food composition.

Fat may be supplied by any of a variety of sources known by those skilled in the art, including meat, meat by-products, fish oil, and plants. Plant fat sources include wheat, flaxseed, rye, barley, rice, sorghum, corn, oats, millet, wheat germ, corn germ, soybeans, peanuts, and cottonseed, as well as oils derived from these and other plant fat sources. Meat fat sources include cow, pork, and poultry fat. The fat may be a crude fat.

Non-limiting examples of fats include animal fats and vegetable fats. In one aspect, the fat source can be an animal fat source such as tallow or poultry fat. Vegetable oils such as corn oil, sunflower oil, safflower oil, grape seed oil, soy bean oil, olive oil and other oils rich in monounsaturated and polyunsaturated fatty acids, may also be used.

The fat may be present in an amount ranging from about 10 wt. % to about 30 wt. % based on the total weight of the food composition - including all percentages and sub-ranges there-between. The fat may be present in an amount ranging from about 16 wt. % to about 30 wt. % based on the total weight of the food composition - including all percentages and sub-ranges there-between. In a preferred embodiment, the protein may be present in an amount ranging from about 16 wt. % to about 26 wt. % based on the total weight of the food composition - including all percentages and sub-ranges there-between. In a preferred embodiment, the fat is present in an amount greater than 16 wt. % based on the total weight of the food composition. Preferably the protein may be present in an amount ranging from about 18 wt. % to about 24 wt. % based on the total weight of the food composition - including all percentages and sub-ranges there-between. In some embodiments, the fat may be present in an amount of about 20.5 wt.% based on the total weight of the food composition.

Carbohydrate may be supplied by any of a variety of sources known by those skilled in the art, including oat fiber, cellulose, peanut hulls, beet pulp, parboiled rice (white and/or brown), corn starch, corn gluten meal, and any combination of those sources. Grains supplying carbohydrate include, but are not limited to, wheat, corn, barley, and rice. Carbohydrate content of foods may be determined by any number of methods known by those of skill in the art.

Non-limiting examples of carbohydrates include grains or cereals such as rice, corn, millet, sorghum, alfalfa, barley, soybeans, canola, oats, wheat, rye, triticale and mixtures thereof. The compositions may also optionally comprise other materials such as dried whey and other dairy by-products.

The carbohydrate may be present in the pet food composition in an amount that is greater than the amount of protein ranging from about 25 wt. % to about 55 wt. % based on the total weight of the food composition - including all percentages and sub-ranges there-between. In some embodiments, the carbohydrate may be present in an amount ranging from about 30 wt. % to about 50 wt. % based on the total weight of the food composition - including all percentages and sub-ranges there-between. In a preferred embodiment, the carbohydrate may be present in an amount ranging from about 35 wt. % to about 45 wt. % based on the total weight of the food composition - including all percentages and sub-ranges there-between. Preferably the carbohydrate may be present in an amount ranging from about 37 wt. % to about 43 wt. % based on the total weight of the food composition - including all percentages and sub-ranges there-between. In some embodiments, the fat may be present in an amount of about 40.5 wt.% based on the total weight of the food composition.

According to the present invention, the carbohydrate is be present in the pet food composition in an amount that is more than the protein. Specifically, the protein and the carbohydrates are present in the food composition in a weight ratio ranging from about 0.5:1 to about 0.8:1 - including all ratios and sub-ranges there-between. In some embodiments, the protein and the carbohydrates may be present in a weight ratio ranging from about 0.55:1 to about 0.75:1 - including all ratios and sub-ranges there-between. In some embodiments, the protein and the carbohydrates may be present in a weight ratio ranging from about 0.6:1 to about 0.75:1 - including all ratios and sub-ranges there-between. In some embodiments, the protein and the carbohydrates may be present in a weight ratio ranging from about 0.7:1.

The pet food compositions also comprise one or more fiber sources. Specifically, the fiber in the pet food composition of the present invention comprises from about 2 wt. % to about 10 wt. % dietary fiber based on the total weight of the food composition, and may further comprise one or more fibers selected from fermentable fiber, nonfermentable fiber, crude fiber, and neutral detergent fiber. Whether digestible or indigestible, soluble or insoluble, the fiber may provide bulk in the food composition.

The fiber may be present in the food composition in an amount ranging from about 3 wt. % to about 20 wt. % based on the total weight of the food composition - including all percentages and sub-ranges there-between. In some embodiments, the fiber may be present in the food composition in an amount ranging from about 5 wt. % to about 15 wt. % based on the total weight of the food composition - including all percentages and sub-ranges there-between. In some embodiments, the fiber may be present in the food composition in an amount ranging from about 7 wt. % to about 12 wt. % based on the total weight of the food composition - including all percentages and sub-ranges there-between.

Dietary fiber refers to components of a plant which are resistant to digestion by an animal's digestive enzymes. Non-limiting examples of fibers include fibers from plant sources such as marine plants but microbial sources of fiber may also be used. A variety of soluble or insoluble fibers may be utilized, as will be known to those of ordinary skill in the art. The fiber source can be beet pulp (from sugar beet), gum arabic, gum talha, psyllium, rice bran, carob bean gum, citrus pulp, pectin, fructooligosaccharide, short chain oligofructose, mannanoligofructose, soy fiber, arabinogalactan, galactooligosaccharide, arabinoxylan, or mixtures thereof.

The dietary fiber is present in the pet food composition in an amount ranging from about 2 wt. % to about 10 wt. % based on the total weight of the food composition - including all percentages and sub-ranges there-between. In a preferred embodiment, the dietary fiber may be present in the food composition in an amount ranging from about 3 wt. % to about 8 wt. % based on the total weight of the food composition - including all percentages and sub-ranges there-between. The dietary fiber may be present in the food composition in an amount of about 5.1 wt. % based on the total weight of the food composition.

Soluble fiber are resistant to digestion and absorption in the small intestine and undergo complete or partial fermentation in the large intestine, e.g., beet pulp, guar gum, chicory root, psyllium, pectin, blueberry, cranberry, squash, apples, oats, beans, citrus, barley, or peas.

The soluble fiber may be present in the pet food composition in an amount ranging from about 0.1 wt. % to about 3.0 wt. % based on the total weight of the food composition - including all percentages and sub-ranges there-between. In a preferred embodiment, the dietary fiber may be present in the pet food composition in an amount ranging from about 0.2 wt. % to about 2.0 wt. % based on the total weight of the food composition - including all percentages and sub-ranges there-between. In a preferred embodiment, the dietary fiber may be present in the pet food composition in an amount ranging from about 0.3 wt. % to about 1.0 wt. % based on the total weight of the food composition - including all percentages and sub-ranges there-between. The dietary fiber may be present in the pet food composition in an amount of about 0.4 wt. % based on the total weight of the food composition.

Insoluble fiber may be supplied by any of a variety of sources, including cellulose, whole wheat products, wheat oat, corn bran, flax seed, grapes, celery, green beans, cauliflower, potato skins, fruit skins, vegetable skins, peanut hulls, and soy fiber.

The insoluble fiber may be present in the pet food composition in an amount ranging from about 2.0 wt. % to about 8.0 wt. % based on the total weight of the food composition - including all percentages and sub-ranges there-between. In a preferred embodiment, the dietary fiber may be present in the pet food composition in an amount ranging from about 3.0 wt. % to about 7.0 wt. % based on the total weight of the food composition - including all percentages and sub-ranges there-between. In a preferred embodiment, the dietary fiber may be present in the pet food composition in an amount ranging from about 4.0 wt. % to about 6.0 wt. % based on the total weight of the food composition - including all percentages and sub-ranges there-between. The dietary fiber may be present in the pet food composition in an amount of about 4.7 wt. % based on the total weight of the food composition.

According to the present invention, the insoluble fiber is present in the pet food composition in an amount that is greater than the soluble fiber. Specifically, the insoluble fiber and the soluble fiber are present in a weight ratio ranging from about 10:1 to about 13:1 - including all ratios and sub-ranges there-between. In some embodiments, the insoluble fiber and the soluble fiber may be present in a weight ratio ranging from about 11:1 to about 12:1 - including all ratios and sub-ranges there-between. In some embodiments, the insoluble fiber and the soluble fiber may be present in a weight ratio of about 11.7:1.

Crude fiber includes indigestible components contained in cell walls and cell contents of plants such as grains, e.g., hulls of grains such as rice, corn, and beans.

The crude fiber may be present in the pet food composition in an amount ranging from about 0.5 wt. % to about 3.0 wt. % based on the total weight of the food composition - including all percentages and sub-ranges there-between. In a preferred embodiment, the crude fiber may be present in the pet food composition in an amount ranging from about 0.5 wt. % to about 1.5 wt. based on the total weight of the food composition - including all percentages and sub-ranges there-between. The crude fiber may be present in the pet food composition in an amount of about 1.1 wt. % based on the total weight of the food composition.

According to the present invention, the crude fiber may be present in the pet food composition in an amount that is less than the dietary fiber. According to the present invention, the crude fiber may be present in the food composition in an amount that is less than the insoluble fiber. According to some embodiments of the present invention, the dietary fiber and the crude fiber may be present in a weight ratio ranging from about 3:1 to about 7:1 - including all ratios and sub-ranges there-between. In some embodiments, the dietary fiber and the crude fiber may be present in a weight ratio ranging from about 4:1 to about 6:1 - including all ratios and sub-ranges there-between. In some embodiments, the dietary fiber and the crude fiber may be present in a weight ratio of about 4.6:1.

Alternatively, the fiber source can be a fermentable fiber. Fermentable fiber has previously been described to provide a benefit to the immune system of a companion animal. Fermentable fiber or other compositions known to skilled artisans that provide a prebiotic to enhance the growth of probiotics within the intestine may also be incorporated into the composition to aid in the enhancement of the benefit provided by the present invention to the immune system of an animal.

The pet food composition may further comprise ash. As described herein, ash consists of compounds that are not organic or water, generally produced by combustion of biological materials.

The ash may be present in the pet food composition in an amount ranging from about 1.0 wt. % to about 10.0 wt. % based on the total weight of the pet food composition - including all amounts and sub-ranges there-between. In a preferred embodiment, the ash may be present in the pet food composition in an amount ranging from about 2.5 wt. % to about 7.5 wt. % based on the total weight of the food composition - including all amounts and sub-ranges there-between. In some embodiments, the ash may be present in the pet food composition in an amount of about 4.5 wt. % based on the total weight of the pet food composition.

The pet food composition of the present invention may further comprise one or more amino acids. Essential amino acids vary from species to species, depending upon the organism's metabolism. For example, it is generally understood that the essential amino acids for dogs and cats (and humans) are phenylalanine, leucine, methionine, lysine, isoleucine, valine, threonine, tryptophan, alanine, histidine and arginine. In addition, taurine (a derivative of cysteine), which is an amino acid but not used to make protein, is an essential nutrient for cats. A balanced diet can provide all the essential amino acids, however, there are certain essential amino acids that are more critical, a deficiency of essential amino acids halts the ability to build proteins. However, a few essential amino acids are especially important because of the physiology of pets and the normal ingredient concentration. Generally, these amino acids are methionine, cysteine, tryptophan, lysine and threonine.

The amino acids (either as free or bound) may be present in an amount ranging from about 24% wt. % to about 40 wt. % based on the total weight of the food composition - including all amounts and sub-ranges there-between.

The pet food compositions of the present invention may further comprise one or more minerals and/or trace elements, e.g., calcium, phosphorus, sodium, potassium, magnesium, manganese, copper, zinc, choline, or iron salts. One preferred trace element is manganese. Manganese is essential to a host of enzymes as a cofactor, which may regulate the metabolism of foods, including proteins, fats, and carbohydrates. Such enzymes may include oxidoreductases, transferases, hydrolases, lyases, isomerases, ligases, lectins, and integrins. Manganese also affects bone development and neurological function. Manganese may be naturally present in the components of the compositions, or it may be added to compositions.

The minerals and/or trace elements may be present in the pet food composition of the invention in an amount ranging from about 2.1 wt. % to about 6.5 wt. % based on the total weight of the food composition - including all amounts and sub-ranges there-between.

In some embodiments, the pet food composition may further include vitamins and minerals in amounts required to avoid deficiency and maintain health. These amounts, and methods of measurement are known by those skilled in the art. For example, AAFCO provides recommended amounts of such ingredients for dogs and cats. As contemplated herein, useful vitamins may include, but are not limited to, vitamin A, vitamin B₁, vitamin B₂, vitamin B₆, vitamin B₁₂, vitamin C, vitamin D, vitamin E, vitamin H (biotin), vitamin K, folic acid, inositol, niacin, and pantothenic acid.

The vitamins may be present in the pet food composition in an amount ranging from about 0.01 wt. % to about 0.15 wt. % based on the total weight of the food composition - including all amounts and sub-ranges there-between.

The pet food composition of the present invention may additionally comprise additives, stabilizers, fillers, thickeners, flavorants, palatability enhancers and colorants in amounts and combinations familiar to one of skill in the art, whereby such component are present in the food composition in an amount ranging from about 0.2 wt. % to about 10.0 wt. % based on the total weight of the food composition - including all amounts and sub-ranges there-between.

In various embodiments, the pet food compositions may contain at least one of (1) one or more probiotics; (2) one or more inactivated probiotics; (3) one or more components of inactivated probiotics that promote health benefits similar to or the same as the probiotics, e.g., proteins, lipids, glycoproteins, and the like; (4) one or more prebiotics; and (5) combinations thereof. The probiotics or their components can be integrated into the food compositions (e.g., uniformly or non-uniformly distributed in the compositions) or applied to the food compositions (e.g., topically applied with or without a carrier). Such methods are known to skilled artisans, e.g., U.S. Pat. No. 5,968,569 and related patents.

Typical probiotics may include, but are not limited to, probiotic strains selected from Lactobacilli, Bifidobacteria, or Enterococci, e.g., *Lactobacillus reuteri, Lactobacillus acidophilus, Lactobacillus animalis, Lactobacillus ruminis, Lactobacillus johnsonii, Lactobacillus casei, Lactobacillus paracasei, Lactobacillus rhamnosus, Lactobacillus fermentum,* and *Bifidobacterium* sp., *Enterococcus faecium* and *Enterococcus* sp. In some embodiments, the probiotic strain can be selected from the group consisting *of Lactobacillus reuteri* (NCC2581; CNCM 1-2448), *Lactobacillus reuteri* (NCC2592; CNCM 1-*2450), Lactobacillus rhamnosus* (NCC2583; CNCM 1-2449), *Lactobacillus reuteri* (NCC2603; CNCM 1-2451), *Lactobacillus reuteri* (NCC2613; CNCM 1-*2452), Lactobacillus acidophilus* (NCC2628; CNCM 1-2453), *Bifidobacterium adolescentis* (e.g., NCC2627), *Bifidobacterium* sp. NCC2657 or *Enterococcus faecium* SF68 (NCIMB 10415). Many such probiotics and their benefits are known to skilled artisans, e.g., EP1213970B1, EP1143806B1, U.S. Pat. No. 7,189,390, EP1482811B1, EP1296565B1, and U.S. Pat. No. 6,929,793.

As stated, the pet food compositions may contain one or more prebiotics, e.g., fructo-oligosaccharides, gluco-oligosaccharides, galacto-oligosaccharides, isomalto-oligosaccharides, xylo-oligosaccharides, soybean oligosaccharides, lactosucrose, lactulose, and isomaltulose. In one embodiment, the prebiotic can be chicory root, chicory root extract, inulin, or combinations thereof. Generally, prebiotics can be administered in amounts sufficient to positively stimulate the healthy microflora in the gut and cause these "good" bacteria to reproduce. Typical amounts range from about one to about 10 grams per serving or from about 5% to about 40% of the recommended daily dietary fiber for an animal. The probiotics and prebiotics can be made part of the composition by any suitable means. Generally, the agents can be mixed with the composition or applied to the surface of the composition, e.g., by sprinkling or spraying. When the agents are part of a kit, the agents can be admixed with other materials or in their own package.

The probiotics and/or prebiotics may be present in the pet food composition in an amount ranging from about 35 wt. % to about 45 wt. % based on the total weight of the food composition - including all amounts and sub-ranges there-between.

While pet foods of any consistency or moisture content are contemplated, preferably the compositions of the present invention may be, for example, a wet or dry animal food composition. "Wet" food refers to food which has a moisture content of about 70 to about a 90%. "Dry" food refers to compositions with about 5 to about 15% moisture content and is often manufactured in the form of small bits or kibbles. Also contemplated herein are compositions that may comprise components of various consistency as well as components that may include more than one consistency, for example, soft, chewy meat-like particles as well as kibble having an outer cereal component and an inner cream component as described in, e.g., U.S. Pat. No. 6,517,877. The kibble may then be dried and optionally coated with one or more topical coatings known by those skilled in the art, for example, flavors, fats, oils, powders, and the like.

The administration can be performed on as-needed basis, an as-desired basis, a regular basis, or intermittent basis. In one aspect, the food composition can be administered to the animal on a regular basis. In one aspect, at least weekly administration can be performed. More frequent administration or consumption, such as twice or three times, or four times, or five times, or six times or seven times weekly, can be performed in certain embodiments. In one aspect, an administration regimen can comprise at least once daily consumption. In one aspect, an administration regimen can comprise periodic administration including at every other week, or every other two weeks, or every other three weeks, or every other month, or every other two months, every other three months, quarterly, every other quarterly, every other two quarterly, every other three quarterly etc.

According to certain aspects of the invention, preferred daily dose ranges for the invention in the daily food composition may range from about 18 g/day to about 35 g/day - including all amounts and sub-ranges there-between. Preferably the daily dose of the food composition may range from about 22 g/day to about 31 g/day, more preferably from about 24 g/day to about 28 g/day - including all amounts and sub-ranges there-between.

According to the methods of the invention, administration, including administration as part of a dietary regimen, can span a period ranging from parturition through the adult life of the animal. In various embodiments, the animal can be a human or companion animal such as a dog or cat. In certain embodiments, the animal can be a young or growing animal. In other embodiments, administration can begin, for example, on a regular or extended regular basis, when the animal has reached more than about 10%, 20%, 30%, 40%, or 50% of its projected or anticipated lifespan. In some embodiments, the animal can have attained 40, 45, or 50% of its anticipated lifespan. In yet other embodiments, the animal can be older having reached 60, 66, 70, 75, or 80% of its likely lifespan. A determination of lifespan may be based on actuarial tables, calculations, estimates, or the like, and may consider past, present, and future influences or factors that are known to positively or negatively affect lifespan. Consideration of species, gender, size, genetic factors, environmental factors and stressors, present and past health status, past and present nutritional status, stressors, and the like may also influence or be taken into consideration when determining lifespan.

Such administration can be performed for a time required to accomplish one or more objectives of the invention, e.g., improving age-related gastrointestinal degeneration, promoting lean body mass, minimizing body fat gain, and/or managing weight in an animal; improving the quality of life; and promoting the health and wellness in an animal.

A food composition comprising one or more other ingredients suitable for consumption by an animal, e.g., one or more of protein, fat, carbohydrate, fiber, vitamins, minerals, probiotics, prebiotics, and the like may be manufactured by methods which comprise admixing one or more ingredients suitable for consumption by an animal. The composition can be made according to any method suitable in the art.

The pet food composition described herein may be formed by blending together the various ingredients to form a blend, whereby the blend is processing by a suitable machine to form an edible pellet (referred to herein as "kibble"). The kibble may be post-processed by applying a coating of one or more palatants.

Compositions of the present invention may be contained in a package. The package may comprise at least one material suitable for containing the food composition and a label affixed to the package containing a word or words, picture, design, acronym, slogan, phrase, or other device, or combination thereof that indicates that the contents of the package contains the food composition. The label affixed to the package may contain a word or words, picture, design, acronym, slogan, phrase, or other device, or combination thereof that indicates that the contents of the package contains the food composition with beneficial properties relating to enhancing age-related gastrointestinal health. Typically, such device comprises the words "promotes gastrointestinal health" or an equivalent expression printed on the package.

Any package configuration and packaging material suitable for containing the composition of the invention may be used, e.g., bag, box, bottle, can, pouch, and the like manufactured from paper, plastic, foil, metal, and the like. For example, the package may contain a pet food composition adapted for a particular animal such as a canine or feline, as appropriate for the label, for instance a companion animal food composition for dogs or cats. For example, the package can be a can or pouch comprising a food composition of the invention. The package may further comprise at least one window that permit the package contents to be viewed without opening the package. The window can be a transparent portion of the packaging material, or the window can be a missing portion of the packaging material.

### EXAMPLES

A first experiment was prepared to measure the impact of the food composition of the present invention for improving age-related gastrointestinal degeneration. The experiment included a number of food composition formulations, as set forth below in Table 1

**Table 1**

| | Ex. 1 | Comp. Ex. 1 | Control |
|---|---|---|---|
| Crude Protein | 27.57 | 37.97 | 30.88 |
| Crude Fat | 20.56 | 20.5 | 21.85 |
| Crude Fiber | 1.1 | 1.2 | 1.7 |
| Moisture | 5.7 | 5.77 | 6.97 |
| Ash | 4.54 | 5.8 | 5.48 |
| Carbohydrate (CHO) | 40.54 | 28.76 | 33.12 |
| Total | 100 | 100 | 100 |
| | | | |
| Insoluble Fiber (IF) | 4.7 | 5.5 | 5.6 |
| Soluble Fiber (SF) | 0.4 | 0.2 | 1.9 |
| Neutral Detergent Fiber | 3.8 | 3.9 | 6.3 |
| Total Dietary Fiber | 5.1 | 5.4 | 7.5 |
| Protein : CHO | 0.68:1 | 1.32:1 | 0.93:1 |
| IF: SF | 11.75:1 | 27.5:1 | 2.95:1 |
| | | | |

Each composition was finished into a kibble generated by extrusion, dried and coated with palatants. Each composition was then fed to a total of 60 healthy cats with age ranges from 2.1 years to 14.2 years. Body weight ranged from 3.00 to 8.2 kg. All animals were mixed gender, neutered and spayed. This study design comprised a selection of three diets which included two test diets and one control diet. This feeding study was performed by the following parallel experiment design. All 60 cats were pre-feed with the baseline control diet for 14 days and divided into three groups (each group had 20 cats) by matching age and gender parameters.

One group was fed a diet consisting of Example 1; and another group was fed a diet consisting of Comparative Example 1, for another 14 days without a washout period. The third group was fed a diet consisting of the Control composition for another 14 days to evaluate - inter alia - the feeding time effect. Fecal samples were collected at the end of pre-feeding period (14th day) and at the end of treatment period on the 28th day. Fecal samples were collected within 30 minutes after defecation and homogenized before being cryogenically frozen for various assays.

A non-targeted metabolomics analysis was performed on the frozen fecal samples collected from each cat fed by the control diet followed by two test diets. The analysis determined the level of NAD, NAD+, and NMN in each fecal sample.

The results are set forth below in Table 2, whereby the results show the change in NAD, NAD+ and NMN levels for the baseline control diet compared to the NAD, NAD+, and NMN levels measured after the feeding period with Example 1, Comparative Example 1 and the Control composition.

**Table 2**

| | Control vs. Control | Ex. 1 vs. Control | Comp. Ex. 1 vs. Control |
|---|---|---|---|
| NAD | 1.38 | 0.85 | 1.22 |
| NMN | 0.69 | 0.57 | 0.79 |
| | | | |
| NAD+ | 0.9 | 8.75 | 0.67 |

As demonstrated by the data described in Table 2, the food composition of Example 1 enhances NAD metabolism by significantly (≤ p 0.05) increasing NAD+ levels in feces samples when compared with their respective controls. However, other groups fed with Comparative Example 1 and the Control diet shows no significant differences in NAD+ levels when compared with their respective controls. No significant differences were observed in the Control group cats fed by control diet in both pre-feed and treatment phase, confirming that the differences observed in NAD+ levels in the group fed with the Example 1 composition is due to diet effect and not feeding time effect.

Surprisingly, the Example 1 composition enhanced NAD metabolism by increasing NAD+ metabolite levels in feces. Because NAD+ levels in feces serve as surrogate for NAD+ levels in the intestine (colon), the results described in Table 2 (above) demonstrate that compositions of the present invention, can improve age related gastrointestinal degeneration in companion animals. This data is even more remarkable considering that the dietary niacin level in the Example 1 composition was lower than the niacin levels in the Control composition and Comparative Example 1.

## Claims

1. A pet food composition comprising:
a protein;
a carbohydrate; and
a dietary fiber comprising insoluble fiber and soluble fiber in a weight ratio of from about 10:1 to about 13:1, whereby the dietary fiber is present in an amount of from about 2 wt. % to about 10 wt. % based on the total weight of the food composition,
wherein the weight ratio of protein to carbohydrate is from about 0.5:1 to about 0.8:1.

2. The pet food composition according to claim 1, wherein the weight ratio of insoluble fiber to soluble fiber is from about 11:1 to about 12:1.

3. The pet food composition according to any one of the foregoing claims,
wherein dietary fiber is present in an amount of from about 3 wt. % to about 8 wt. %, optionally in an amount of about 5.1 wt. %.

4. The pet food composition according to any one of the foregoing claims, wherein the protein comprises crude protein.

5. The pet food composition according to any one of the foregoing claims,
wherein the food composition further comprises crude fiber and neutral detergent fiber, optionally wherein the crude fiber is present in an amount that is less than the dietary fiber, further optionally wherein the crude fiber is present in an amount ranging from about 0.5 wt. % to about 1.5 wt. %.

6. The pet food composition according to any one of the foregoing claims,
wherein the carbohydrate is present in an amount ranging from about 25 wt. % to about 55 wt. % based on the total weight of the food composition.

7. The pet food composition of any one of the foregoing claims, further comprising fat is present in an amount greater than 16 wt. % based on the total weight of the food composition.

8. The pet food composition according to one of the foregoing claims, wherein the weight ratio of protein to carbohydrate is from about 0.55:1 to about 0.75:1, optionally from about 0.6:1 to about 0.75:1.

9. The pet food composition according to any one of claims 7 to 8, wherein the fat is present in an amount of from about 16 wt. % to about 30 wt. %, optionally from about 18 wt. % to about 24 wt. %.

10. The pet food composition according to any one of the foregoing claims, wherein the food composition further comprises ash.

11. The pet food composition according to any one of the foregoing claims for use in improving age-related gastrointestinal degeneration in a cat, wherein improving age-related gastrointestinal degeneration in the cat includes enhancing nicotinamide adenine dinucleotide metabolism and increasing levels of oxidized nicotinamide adenine dinucleotide in the cat.

## Patentansprüche

1. Haustierfutterzusammensetzung, umfassend:
ein Protein;
ein Kohlenhydrat; und
einen Ballaststoff, der unlösliche Ballaststoffe und lösliche Ballaststoffe in einem Gewichtsverhältnis von etwa 10:1 bis etwa 13:1 umfasst, wobei der Ballaststoff in einer Menge von etwa 2 Gew.-% bis etwa 10 Gew.-%, bezogen auf das Gesamtgewicht der Futterzusammensetzung, vorhanden ist,
wobei das Gewichtsverhältnis von Protein zu Kohlenhydrat etwa 0,5:1 bis etwa 0,8:1 beträgt.

2. Haustierfutterzusammensetzung gemäß Anspruch 1, wobei das Gewichtsverhältnis von unlöslichen Ballaststoffen zu löslichen Ballaststoffen etwa 11:1 bis etwa 12:1 beträgt.

3. Haustierfutterzusammensetzung gemäß einem der vorstehenden Ansprüche, wobei Ballaststoffe in einer Menge von etwa 3 Gew.-% bis etwa 8 Gew.-%, optional in einer Menge von etwa 5,1 Gew.-%, vorhanden sind.

4. Haustierfutterzusammensetzung gemäß einem der vorstehenden Ansprüche, wobei das Protein Rohprotein umfasst.

5. Haustierfutterzusammensetzung gemäß einem der vorstehenden Ansprüche, wobei die Futterzusammensetzung ferner Rohfaser und neutrale Detergensfaser umfasst, wobei optional die Rohfaser in einer Menge vorhanden ist, die geringer ist als die Ballaststoffmenge, wobei ferner optional die Rohfaser in einer Menge von etwa 0,5 Gew.-% bis etwa 1,5 Gew.-% vorhanden ist.

6. Haustierfutterzusammensetzung gemäß einem der vorstehenden Ansprüche, wobei das Kohlenhydrat in einer Menge von etwa 25 Gew.-% bis etwa 55 Gew.-%, bezogen auf das Gesamtgewicht der Futterzusammensetzung, vorhanden ist.

7. Haustierfutterzusammensetzung gemäß einem der vorstehenden Ansprüche, die ferner Fett in einer Menge von mehr als 16 Gew.-%, bezogen auf das Gesamtgewicht der Futterzusammensetzung, umfasst.

8. Haustierfutterzusammensetzung gemäß einem der vorstehenden Ansprüche, wobei das Gewichtsverhältnis von Protein zu Kohlenhydrat von etwa 0,55:1 bis etwa 0,75:1, optional von etwa 0,6:1 bis etwa 0,75:1, beträgt.

9. Haustierfutterzusammensetzung gemäß einem der Ansprüche 7 bis 8, wobei das Fett in einer Menge von etwa 16 Gew.-% bis etwa 30 Gew.-%, optional von etwa 18 Gew.-% bis etwa 24 Gew.-%, vorhanden ist.

10. Haustierfutterzusammensetzung gemäß einem der vorstehenden Ansprüche, wobei die Futterzusammensetzung ferner Asche umfasst.

11. Haustierfutterzusammensetzung gemäß einem der vorstehenden Ansprüche zur Verwendung bei der Verbesserung der altersbedingten Magen-Darm-Degeneration bei einer Katze, wobei die Verbesserung der altersbedingten Magen-Darm-Degeneration bei der Katze die Verbesserung des Nicotinamidadenindinukleotid-Stoffwechsels und die Erhöhung des Gehalts an oxidiertem Nicotinamidadenindinukleotid bei der Katze umfasst.

## Revendications

1. Composition alimentaire pour animaux de compagnie comprenant :
une protéine ;
un glucide ; et
une fibre alimentaire comprenant une fibre insoluble et une fibre soluble selon un rapport pondéral d'environ 10:1 à environ 13:1, dans laquelle la fibre alimentaire est présente en une quantité d'environ 2 % en poids à environ 10 % en poids par rapport au poids total de la composition alimentaire,
dans laquelle le rapport pondéral de la protéine au glucide est d'environ 0,5:1 à environ 0,8:1.

2. Composition alimentaire pour animaux de compagnie selon la revendication 1, dans laquelle le rapport pondéral de la fibre insoluble à la fibre soluble est d'environ 11:1 à environ 12:1.

3. Composition alimentaire pour animaux de compagnie selon l'une quelconque des revendications précédentes, dans laquelle la fibre alimentaire est présente en une quantité d'environ 3 % en poids à environ 8 % en poids, éventuellement en une quantité d'environ 5,1 % en poids.

4. Composition alimentaire pour animaux de compagnie selon l'une quelconque des revendications précédentes, dans laquelle la protéine comprend une protéine brute.

5. Composition alimentaire pour animaux de compagnie selon l'une quelconque des revendications précédentes, dans laquelle la composition alimentaire comprend en outre une fibre brute et une fibre insoluble dans les détergents neutres, éventuellement dans laquelle la fibre brute est présente en une quantité qui est inférieure à celle de la fibre alimentaire, et en outre éventuellement dans laquelle la fibre brute est présente en une quantité comprise entre environ 0,5 % en poids et environ 1,5 % en poids.

6. Composition alimentaire pour animaux de compagnie selon l'une quelconque des revendications précédentes, dans laquelle le glucide est présent en une quantité comprise entre environ 25 % en poids et environ 55 % en poids par rapport au poids total de la composition alimentaire.

7. Composition alimentaire pour animaux de compagnie selon l'une quelconque des revendications précédentes, comprenant en outre de la matière grasse présente en une quantité supérieure à 16 % en poids par rapport au poids total de la composition alimentaire.

8. Composition alimentaire pour animaux de compagnie selon l'une des revendications précédentes, dans laquelle le rapport pondéral de la protéine au glucide est compris entre environ 0,55:1 et environ 0,75:1, éventuellement entre environ 0,6:1 et environ 0,75:1.

9. Composition alimentaire pour animaux de compagnie selon l'une quelconque des revendications 7 à 8, dans laquelle la matière grasse est présente en une quantité comprise entre environ 16 % en poids et environ 30 % en poids, éventuellement entre environ 18 % en poids et environ 24 % en poids.

10. Composition alimentaire pour animaux de compagnie selon l'une quelconque des revendications précédentes, dans laquelle la composition alimentaire comprend en outre des cendres.

11. Composition alimentaire pour animaux de compagnie selon l'une quelconque des revendications précédentes, pour une utilisation dans l'amélioration de la dégénérescence gastro-intestinale liée à l'âge chez le chat, dans laquelle l'amélioration de la dégénérescence gastro-intestinale liée à l'âge chez le chat inclut la stimulation du métabolisme du nicotinamide adénine dinucléotide et l'augmentation des niveaux de nicotinamide adénine dinucléotide oxydé chez le chat.
